# EUROPEAN PATENT SPECIFICATION

(11) **EP 2 693 643 B1**
(45) Date of publication and mention of the grant of the patent: **10.12.2014**
(21) Application number: 12179251.9
(22) Date of filing: 03.08.2012
(51) Int. Cl.: H04B 1/00

(54) **Mobile wireless communications device with ddpdt rf switch and related methods**
Mobile drahtlose Kommunikationsvorrichtung mit DDPDT-HF-Schalter und zugehörige Verfahren
Dispositif mobile de communications sans fil doté d'un commutateur RF DPDT et procédés apparentés

(43) Date of publication of application: 05.02.2014
(73) Proprietor: BlackBerry Limited, Waterloo, ON N2K 0A7 (CA)
(72) Inventor: George, Liviu, Waterloo Ontatio, Canada N2L 3W8 (CA); Little, Christopher Robert, Waterloo Ontatio, Canada N2L 3W8 (CA); Hughes, Simon Andrew, Waterloo Ontatio, Canada N2L 3W8 (CA)
(74) Representative: Bryn-Jacobsen, Caelia

(56) References cited:
- US-A1- 2007 223 615

## Description

### Technical Field

This application relates to the field of communications, and more particularly, to mobile wireless communications devices and related methods.

### Background

Cellular communication systems continue to grow in popularity and have become an integral part of both personal and business communications. Cellular telephones allow users to place and receive phone calls almost anywhere they travel. Moreover, as cellular telephone technology is advanced, so too has the functionality of cellular devices. For example, many cellular devices now incorporate Personal Digital Assistant (PDA) features such as calendars, address books, task lists, calculators, memo and writing programs, etc. These multifunction devices usually allow users to wirelessly send and receive electronic mail (email) messages and access the internet via a cellular network and/or a wireless local area network (WLAN), for example. Document US 2007/0223615 discloses a transceiver interface architecture.

Cellular devices have radio frequency (RF) processing circuits and receive or transmit radio communications signals typically using modulation schemes. The typical cellular device may have multiple transmit and receive pathways from the antenna to a digital signal processor (DSP). In particular, each signal pathway may comprise a filter to help isolate the desired frequency band from extraneous electromagnetic signals, for example, noise and interference. Nevertheless, as frequency bands change because of regulatory reasons, expansion, etc. and as more transceivers are added to the cellular device, the likelihood of self-interference may increase.

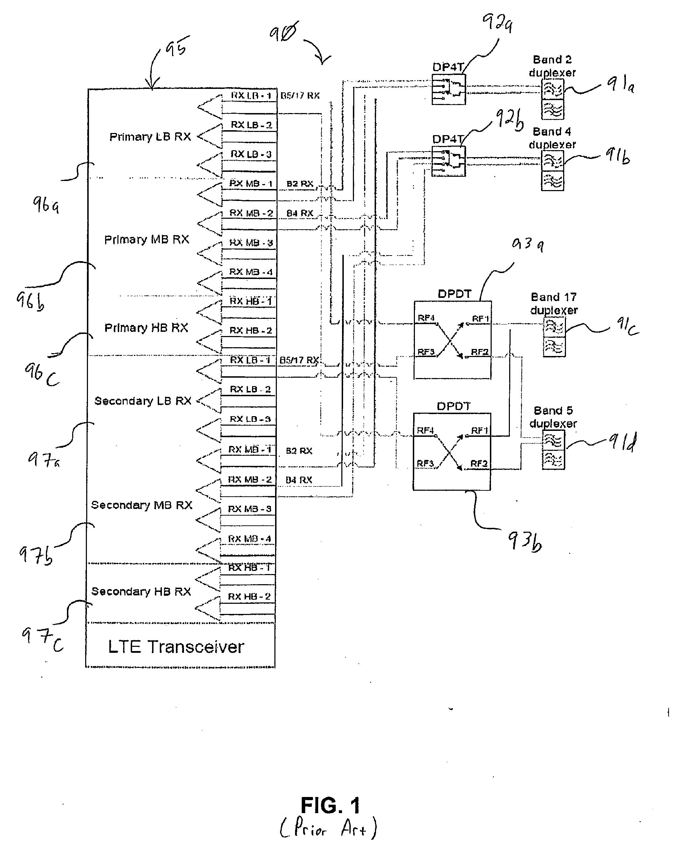

The routing of the pathways from the antenna to the DSP in a fourth generation Long Term Evolution (LTE) device may be problematic, particularly, the RF performance demands in carrier aggregation mode. Referring to FIG. 1, an approach to a receiver device **90** is shown. The receiver device **90** illustratively includes an LTE transceiver **95** comprising a plurality of primary and secondary receivers **96a-96c, 97a-97c.** The receiver device **90** illustratively includes a plurality of band pass duplexers **91a-91d** for passing the respective bands of the LTE communication standard. The receiver device **90** illustratively includes a pair of double-pole, four throw switches **92a-92b** coupled between the band pass duplexers **91a-91b** and the LTE transceiver **95,** and a pair of double-pole, double-throw switches **93a-93b** coupled between the band pass duplexers **91c-91d** and the LTE transceiver **95.** A potential drawback of this approach is that the front end module of the receiver device **90** is complicated, which adds to difficulty and cost of manufacture. Moreover, as more band capabilities are added, the complexity also increases.

### Brief Description of the Drawings

FIG. 1 is a schematic block diagram of a mobile wireless communications device, according to the prior art.
FIG. 2 is a schematic block diagram of an example embodiment of a mobile wireless communications device.
FIG. 3 is a flowchart illustrating operation of the mobile wireless communications device of FIG. 2.
FIG. 4 is a schematic block diagram illustrating example components of a mobile wireless communications device that may be used with the mobile wireless communications device of FIG. 2.

### Detailed Description of the Preferred Embodiments

The present description is made with reference to the accompanying drawings, in which embodiments are shown. However, many different embodiments may be used, and thus the description should not be construed as limited to the embodiments set forth herein. Rather, these embodiments are provided so that this disclosure will be thorough and complete. Like numbers refer to like elements throughout.

Generally speaking, a mobile wireless communications device may comprise an antenna, a plurality of primary RF receivers configured to operate at a plurality of different RF bands, each primary RF receiver having a differential input, and a plurality of secondary RF receivers also configured to operate at the plurality of different RF bands, each secondary RF receiver having a differential input. The mobile wireless communications device may also include first and second RF filters coupled to the antenna and configured to respectively pass first and second RF bands from among the plurality of different RF bands, and a first differential double-pole, double-throw (DDPDT) RF switch coupled between the first and second RF filters and the differential inputs of respective first ones of the pluralities of primary and secondary RF receivers.

The mobile wireless communications device may further comprise third and fourth RF filters coupled to the antenna and configured to respectively pass third and fourth RF bands from among the plurality of different RF bands, and a second DDPDT RF switch coupled between the third and fourth RF filters and the differential inputs of respective second ones of the pluralities of primary and secondary RF receivers.

More specifically, the mobile wireless communications device may further comprise a controller configured to operate the first and second DDPDT RF switches in a carrier aggregation mode. In some embodiments, the plurality of primary RF receivers and the plurality of secondary RF receivers may each comprise fourth generation LTE RF receivers. For example, the first and second RF bands may respectively comprise LTE Bands 2 and 4, and the third and fourth RF bands may respectively comprise LTE Bands 17 and 5.

Additionally, the plurality of primary RF receivers may comprise a group of low band RF receivers, a group of mid band RF receivers, and a group of high band RF receivers. Similarly, the plurality of secondary RF receivers may comprise a group of low band RF receivers, a group of mid band RF receivers, and a group of high band RF receivers.

The mobile wireless communications device may further comprise a housing containing the antenna, the first and second RF filters, the pluralities of primary and secondary RF receivers, and the first DDPDT RF switch. The mobile wireless communications device may further comprise a respective duplexer associated with each of the first and second RF filters.

Another aspect is directed to a method of using a mobile wireless communications device comprising an antenna, a plurality of primary RF receivers operating at a plurality of different RF bands, each primary RF receiver having a differential input, and a plurality of secondary RF receivers also operating at the plurality of different RF bands, each secondary RF receiver having a differential input. The mobile wireless communications device may also include first and second RF filters coupled to the antenna and respectively passing first and second RF bands from among the plurality of different RF bands. The method may comprise using a first DDPDT RF switch in the mobile wireless communications device coupled between the first and second RF filters and the differential inputs of respective first ones of the pluralities of primary and secondary RF receivers.

Example mobile wireless communications devices may include portable or personal media players (e.g., music or MP3 players, video players, etc.), remote controls (e.g., television or stereo remotes, etc.), portable gaming devices, portable or mobile telephones, smartphones, tablet computers, etc.

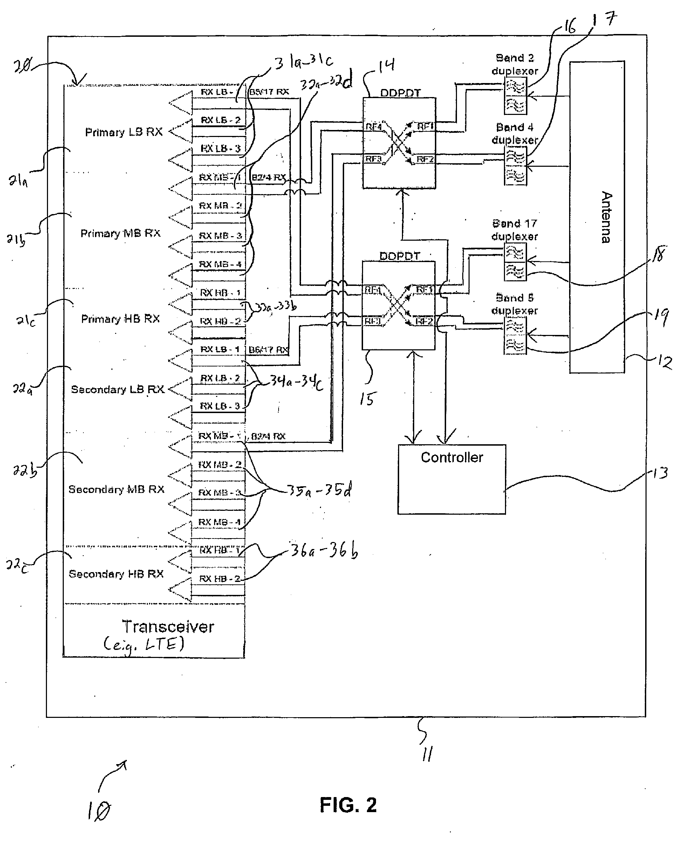

Referring now to FIG. 2, a mobile wireless communications device **10** according to the present disclosure is now described. The invention is defined by the claims. The mobile wireless communications device **10** illustratively includes an antenna **12,** and a transceiver **20** (e.g. LTE) coupled thereto. The transceiver **20** illustratively includes a plurality of primary RF receivers **21a-21c** configured to operate at a plurality of different RF bands. More specifically, the primary RF receivers comprise a primary low band receiver **21a,** a primary mid band receiver **21b,** and a primary high band receiver **21c.** The primary low band receiver **21a** illustratively includes three differential inputs **31a-31c,** the primary mid band receiver **21b** illustratively includes four differential inputs **32a-32d, and** the primary high band receiver **21c** illustratively includes two differential inputs **33a-33b.**

The transceiver **20** illustratively includes a plurality of secondary RF receivers **22a-22c,** again low band, mid band, and high band, and also configured to operate at the plurality of different RF bands. Similar to the primary RF receivers **21a-21c,** each secondary RF receiver includes a corresponding number of differential inputs **34a-34c** (low band), **35a-35d** (mid band), **& 36a-36b** (high band).

The mobile wireless communications device **10** illustratively includes first and second RF filters (illustratively shown as band pass duplexer filters) **16-17** coupled to the antenna **12** and configured to respectively pass first and second RF bands from among the plurality of different RF bands, and a first DDPDT RF switch **14** coupled between the first and second RF filters and the first differential inputs **32a, 35a** of the mid band primary and secondary RF receivers **21b, 22b.** Advantageously, the first DDPDT RF switch **14** efficiently manages routing and switching of signals across multiple bands without the complex routing networks of existing approaches.

The mobile wireless communications device also illustratively includes third and fourth RF filters **18-19** coupled to the antenna **12** and configured to respectively pass third and fourth RF bands from among the plurality of different RF bands, and a second DDPDT RF switch **15** coupled between the third and fourth RF filters and the first differential inputs **31a, 34a** of the low band primary and secondary RF receivers **21a, 22a.** In the illustrated embodiment, the mobile wireless communications device **10** further comprises a respective duplexer associated with each of the RF filters **16-19,** i.e. band pass duplexer filters.

Also, in the illustrated embodiment, the mobile wireless communications device **11** comprises a housing **11** containing the antenna **12,** the first, second, third, and fourth RF filters **16-19,** the transceiver **20** with the pluralities of primary and second RF receivers **21a-21c, 22a-22c,** and the first and second DDPDT RF switches **14-15.**

In the illustrated embodiment, the mobile wireless communications device **10** includes a controller **13** configured to operate the first and second DDPDT RF switches **14-15** in a carrier aggregation mode. For example, in some embodiments, the primary RF receivers and the secondary RF receivers **21a-21c, 22a-22c** may each comprise fourth generation LTE RF receivers. For example, the first and second RF bands may respectively comprise LTE Bands 2 and 4, and the third and fourth RF bands may respectively comprise LTE Bands 17 and 5.

In the illustrated mobile wireless communications device **10,** for simplicity, only the primary and secondary RF receivers **21a-21c, 22a-22c** are shown. The mobile wireless communications device **10** can also include other receivers, such as a multiple input multiple output (MIMO) receiver, and a diversity receiver. Each receiver path may include a respective DDPDT RF switch, and RF filters, as described herein. Also, in this illustrated embodiment, the swapped bands are exemplary. For example, the low bands (700MHz-1GHz) may be swapped since the loss of the RF switches would be minimal and receivers usually have better margins in sensitivity at these frequencies.

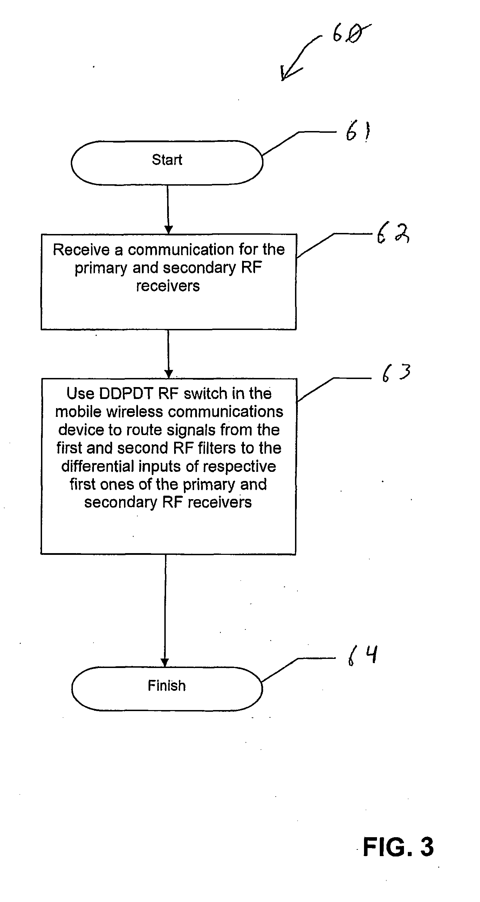

Referring now additionally to FIG. 3, a flowchart **60** illustrates a method of operating the mobile wireless communications device **10** (Block **61**). This aspect is directed to a method of using a mobile wireless communications device **10** comprising an antenna **12,** a plurality of primary RF receivers **21a-21c** operating at a plurality of different RF bands, each primary RF receiver having a differential input **31a-33b,** and a plurality of secondary RF receivers **22a-22c** also operating at the plurality of different RF bands, each secondary RF receiver having a differential input **34a-36b.** The mobile wireless communications device **10** may also include first and second RF filters **16-17** coupled to the antenna **12** and respectively passing first and second RF bands from among the plurality of different RF bands. The method may comprise receiving a communication, and using a first DDPDT RF switch **14** in the mobile wireless communications device **10** coupled between the first and second RF filters **16-17** and the differential inputs **32a, 35a** of respective first ones **221, 22b** of the pluralities of primary and secondary RF receivers to route the signal (Blocks **62-64**).

Advantageously, the mobile wireless communications device 10 described herein provides an approach to issues in the rollout of new LTE Release 10, which may require simultaneous receiving on different frequency bands (carrier aggregation) and may create challenges for user equipment (UE) RF design. For example, one of the issues is the simultaneous receiving in Low Band (LB) + Mid Band (MB) while being able to receive a LB + High Band (HB) and MB+HB band combination (LB stands for any of the LTE Bands 5, 8, 12, 13, 17, 20, MB for 1,2,3,4 and HB for Band 7), as in European 20+3, 20+7 and 3+7 band combinations. Two receivers can accommodate 20+7 and 20+3, but there may a need for special internal or external switching circuitry if the receiver accommodates bands 3+7 on the same receiver. If an internal switch is not available or if the Release 10 approach involves two separate RF integrated circuits (ICs) with differential receiver inputs, there may be an issue with switching signals between the two inputs/RF ICs. These band combinations are listed herein: LTE FDD: 17+2, 17+4, 13+4, MediaFLO+2, 3+7, 20+7, 20+3, 3+5; and 3G: 8+1, 5+1, 5+2, 2+4.

The receive front-end architecture in the mobile wireless communications device **10** may provide an approach to the problems outlined above by replacing two DPDT switches with one differential DPDT (DDPDT). The mobile wireless communications device 10 may provide the following advantages: 1) band coverage for all 2G/3G/LTE band combinations for carrier aggregation (Releases 10 and up); 2) simplified transceiver architecture, requiring fewer RX input ports; and 3) smaller, cheaper and easier to route RF swapping solution for differential signals.

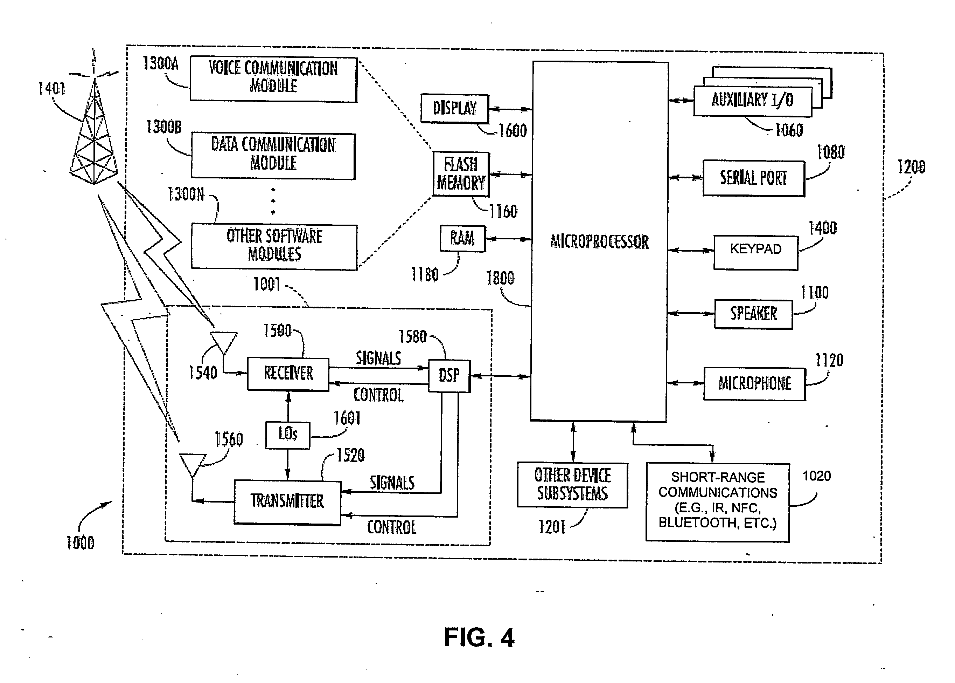

Example components of a mobile wireless communications device **1000** that may be used in accordance with the above-described embodiments are further described below with reference to FIG. 4. The device **1000** illustratively includes a housing **1200,** a keyboard or keypad **1400** and an output device **1600.** The output device shown is a display **1600,** which may comprise a full graphic liquid crystal display (LCD). Other types of output devices may alternatively be utilized. A processing device **1800** is contained within the housing **1200** and is coupled between the keypad **1400** and the display **1600.** The processing device **1800** controls the operation of the display **1600,** as well as the overall operation of the mobile device **1000,** in response to actuation of keys on the keypad **1400.**

The housing **1200** may be elongated vertically, or may take on other sizes and shapes (including clamshell housing structures). The keypad may include a mode selection key, or other hardware or software for switching between text entry and telephony entry.

In addition to the processing device **1800,** other parts of the mobile device **1000** are shown schematically in FIG. 4. These include a communications subsystem **1001;** a short-range communications subsystem **1020;** the keypad **1400** and the display **1600,** along with other input/output devices **1060, 1080, 1100** and **1120;** as well as memory devices **1160, 1180** and various other device subsystems **1201.** The mobile device **1000** may comprise a two-way RF communications device having data and, optionally, voice communications capabilities. In addition, the mobile device **1000** may have the capability to communicate with other computer systems via the Internet.

Operating system software executed by the processing device **1800** is stored in a persistent store, such as the flash memory **1160,** but may be stored in other types of memory devices, such as a read only memory (ROM) or similar storage element. In addition, system software, specific device applications, or parts thereof, may be temporarily loaded into a volatile store, such as the random access memory (RAM) **1180.** Communications signals received by the mobile device may also be stored in the RAM **1180.**

The processing device **1800,** in addition to its operating system functions, enables execution of software applications **1300A-1300N** on the device **1000.** A predetermined set of applications that control basic device operations, such as data and voice communications **1300A** and **1300B,** may be installed on the device **1000** during manufacture. In addition, a personal information manager (PIM) application may be installed during manufacture. The PIM may be capable of organizing and managing data items, such as e-mail, calendar events, voice mails, appointments, and task items. The PIM application may also be capable of sending and receiving data items via a wireless network **1401.** The PIM data items may be seamlessly integrated, synchronized and updated via the wireless network **1401** with corresponding data items stored or associated with a host computer system.

Communication functions, including data and voice communications, are performed through the communications subsystem **1001,** and possibly through the short-range communications subsystem **1020.** The communications subsystem **1001** includes a receiver **1500,** a transmitter **1520,** and one or more antennas **1540** and **1560.** In addition, the communications subsystem **1001** also includes a processing module, such as a digital signal processor (DSP) **1580,** and local oscillators (LOs) **1601.** The specific design and implementation of the communications subsystem **1001** is dependent upon the communications network in which the mobile device **1000** is intended to operate. For example, a mobile device **1000** may include a communications subsystem **1001** designed to operate with the Mobitex^{™}, Data TAC^{™} or General Packet Radio Service (GPRS) mobile data communications networks, and also designed to operate with any of a variety of voice communications networks, such as Advanced Mobile Phone System (AMPS), time division multiple access (TDMA), code division multiple access (CDMA), Wideband code division multiple access (W-CDMA), personal communications service (PCS), GSM (Global System for Mobile Communications), enhanced data rates for GSM evolution (EDGE), etc. Other types of data and voice networks, both separate and integrated, may also be utilized with the mobile device **1000.** The mobile device **1000** may also be compliant with other communications standards such as 3GSM, 3rd Generation Partnership Project (3GPP), Universal Mobile Telecommunications System (UMTS), 4G, etc.

Network access requirements vary depending upon the type of communication system. For example, in the Mobitex and DataTAC networks, mobile devices are registered on the network using a unique personal identification number or PIN associated with each device. In GPRS networks, however, network access is associated with a subscriber or user of a device. A GPRS device therefore typically involves use of a subscriber identity module, commonly referred to as a SIM card, in order to operate on a GPRS network.

When required network registration or activation procedures have been completed, the mobile device **1000** may send and receive communications signals over the communication network **1401.** Signals received from the communications network **1401** by the antenna **1540** are routed to the receiver **1500,** which provides for signal amplification, frequency down conversion, filtering, channel selection, etc., and may also provide analog to digital conversion. Analog-to-digital conversion of the received signal allows the DSP **1580** to perform more complex communications functions, such as demodulation and decoding. In a similar manner, signals to be transmitted to the network **1401** are processed (e.g. modulated and encoded) by the DSP **1580** and are then provided to the transmitter **1520** for digital to analog conversion, frequency up conversion, filtering, amplification and transmission to the communication network **1401** (or networks) via the antenna **1560.**

In addition to processing communications signals, the DSP **1580** provides for control of the receiver **1500** and the transmitter **1520.** For example, gains applied to communications signals in the receiver **1500** and transmitter **1520** may be adaptively controlled through automatic gain control algorithms implemented in the DSP **1580.**

In a data communications mode, a received signal, such as a text message or web page download, is processed by the communications subsystem **1001** and is input to the processing device **1800.** The received signal is then further processed by the processing device **1800** for an output to the display **1600,** or alternatively to some other auxiliary I/O device **1060.** A device may also be used to compose data items, such as e-mail messages, using the keypad **1400** and/or some other auxiliary I/O device **1060,** such as a touchpad, a rocker switch, a thumb-wheel, or some other type of input device. The composed data items may then be transmitted over the communications network **1401** via the communications subsystem **1001.**

In a voice communications mode, overall operation of the device is substantially similar to the data communications mode, except that received signals are output to a speaker **1100,** and signals for transmission are generated by a microphone **1120.** Alternative voice or audio I/O subsystems, such as a voice message recording subsystem, may also be implemented on the device **1000.** In addition, the display **1600** may also be utilized in voice communications mode, for example to display the identity of a calling party, the duration of a voice call, or other voice call related information.

The short-range communications subsystem enables communication between the mobile device **1000** and other proximate systems or devices, which need not necessarily be similar devices. For example, the short-range communications subsystem may include an infrared device and associated circuits and components, a Bluetooth^{™} communications module to provide for communication with similarly-enabled systems and devices, or a NFC sensor for communicating with a NFC device or NFC tag via NFC communications.

Many modifications and other embodiments will come to the mind of one skilled in the art having the benefit of the teachings presented in the foregoing descriptions and the associated drawings. Therefore, it is understood that various modifications and embodiments are intended to be included within the scope of the appended claims.

## Claims

1. A mobile wireless communications device (10) comprising:
an antenna (12);
a plurality of primary radio frequency (RF) receivers (21a-21c) configured to operate at a plurality of different RF bands, each primary RF receiver having a differential input;
a plurality of secondary RF receivers (22a-22c) also configured to operate at the plurality of different RF bands, each secondary RF receiver having a differential input;
first and second RF filters (16-17) coupled to said antenna and configured to respectively pass first and second RF bands from among the plurality of different RF bands; and
a first differential double-pole, double-throw (DDPDT) RF switch (14) coupled between said first and second RF filters and the differential inputs of respective first ones of said pluralities of primary and secondary RF receivers (21b, 22b).

2. The mobile wireless communications device of Claim 1 further comprising:
third and fourth RF filters (18-19)coupled to said antenna and configured to respectively pass third and fourth RF bands from among the plurality of different RF bands; and
a second DDPDT RF switch (15) coupled between said third and fourth RF filters and the differential inputs of respective second ones of said pluralities of primary and secondary RF receivers.

3. The mobile wireless communications device of Claim 2 further comprising a controller (13) configured to operate said first and second DDPDT RF switches in a carrier aggregation mode.

4. The mobile wireless communications device of Claim 2 wherein said plurality of primary RF receivers and said plurality of secondary RF receivers comprise fourth generation Long Term Evolution (LTE) RF receivers.

5. The mobile wireless communications device of Claim 4 wherein said first and second RF bands respectively comprise LTE Bands 2 and 4; and wherein said third and fourth RF bands respectively comprise LTE Bands 17 and 5.

6. The mobile wireless communications device of Claim 1 wherein said plurality of primary RF receivers comprises:
a group of low band RF receivers (31a-31c);
a group of mid band RF receivers (32a-32d); and
a group of high band RF receivers (33a-33b).

7. The mobile wireless communications device of Claim 1 wherein said plurality of secondary RF receivers comprises:
a group of low band RF receivers (34a-34c);
a group of mid band RF receivers (35a-35d); and
a group of high band RF receivers (36a-36b).

8. The mobile wireless communications device of Claim 1 further comprising a housing (11) containing said antenna, said first and second RF filters, said pluralities of primary and secondary RF receivers, and said first DDPDT RF switch.

9. The mobile wireless communications device of Claim 1 further comprising a respective duplexer associated with each of said first and second RF filters.

10. A method of using a mobile wireless communications device (10) comprising an antenna (12), a plurality of primary radio frequency (RF) receivers (21a-21c) operating at a plurality of different RF bands, each primary RF receiver having a differential input, a plurality of secondary RF receivers (22a-22c) also operating at the plurality of different RF bands, each secondary RF receiver having a differential input, and first and second RF filters (16-17) coupled to the antenna and respectively passing first and second RF bands from among the plurality of different RF bands, the method comprising:
using a first differential double-pole, double-throw (DDPDT) RF switch (14) in the mobile wireless communications device coupled between the first and second RF filters and the differential inputs of respective first ones of the pluralities of primary and secondary RF receivers.

11. The method of Claim 10 further comprising:
using third and fourth RF filters (18-19) in the mobile wireless communications device and coupled to the antenna to respectively pass third and fourth RF bands from among the plurality of different RF bands; and
using a second DDPDT RF switch (15) in the mobile wireless communications device and coupled between the third and fourth RF filters and the differential inputs of respective second ones of the pluralities of primary and secondary RF receivers.

12. The method of Claim 11 further comprising operating the first and second DDPDT RF switches in a carrier aggregation mode.

13. The method of Claim 11 wherein the plurality of primary RF receivers and the plurality of secondary RF receivers comprise fourth generation Long Term Evolution (LTE) RF receivers.

14. The method of Claim 13 wherein the first and second RF bands respectively comprise LTE Bands 2 and 4; and wherein the third and fourth RF bands respectively comprise LTE Bands 17 and 5.

15. The method of Claim 10 wherein the plurality of primary RF receivers and the plurality of secondary RF receivers each comprises:
a group of low band RF receivers (31a-31c);
a group of mid band RF receivers (32a-32d); and
a group of high band RF receivers (33a-33b).

## Patentansprüche

1. Mobile drahtlose Kommunikationsvorrichtung (10), die aufweist:
eine Antenne (12);
eine Vielzahl von primären Funkfrequenz(RF - radio frequency)-Empfängern (21a-21c), die konfiguriert sind zum Arbeiten in einer Vielzahl von verschiedenen RF-Bändern, wobei jeder primäre RF-Empfänger einen Differentialeingang hat;
eine Vielzahl von sekundären RF-Empfängern (22a-22c), die ebenfalls konfiguriert sind zum Arbeiten in der Vielzahl von verschiedenen RF-Bändern, wobei jeder sekundäre RF-Empfänger einen Differentialeingang hat;
erste und zweite RF-Filter (16-17), die mit der Antenne gekoppelt sind und
konfiguriert sind zum jeweiligen Durchlassen erster und zweiter RF-Bänder aus der Vielzahl von verschiedenen RF-Bändern; und
einen ersten DDPDT(differential double-pole double-throw)-RF-Schalter (14), der zwischen den ersten und zweiten RF-Filtern und den Differentialeingängen von jeweiligen ersten der Vielzahl von primären und
sekundären RF-Empfängern (21b, 22b) gekoppelt ist.

2. Die mobile drahtlose Kommunikationsvorrichtung gemäß Anspruch 1, die weiter aufweist:
dritte und vierte RF-Filter (18-19), die mit der Antenne gekoppelt sind und
konfiguriert sind zum jeweiligen Durchlassen dritter und vierter RF-Bänder aus der Vielzahl von verschiedenen RF-Bändern; und
einen zweiten DDPDT-RF-Schalter (15), der zwischen den dritten und
vierten RF-Filtern und den Differentialeingängen von jeweiligen zweiten der Vielzahl von primären und sekundären RF-Empfängern gekoppelt ist.

3. Die mobile drahtlose Kommunikationsvorrichtung gemäß Anspruch 2, die weiter eine Steuervorrichtung (13) aufweist, die konfiguriert ist zum Betreiben der ersten und zweiten DDPDT-RF-Schalter in einem Trägeraggregationsmodus.

4. Die mobile drahtlose Kommunikationsvorrichtung gemäß Anspruch 2, wobei die Vielzahl von primären RF-Empfängern und die Vielzahl von sekundären RF-Empfängern LTE(Long Term Evolution)-RF-Empfänger der vierten Generation aufweisen.

5. Die mobile drahtlose Kommunikationsvorrichtung gemäß Anspruch 4, wobei die ersten und zweiten RF-Bänder jeweils die LTE-Bänder 2 und 4 aufweisen; und wobei die dritten und vierten RF-Bänder jeweils die LTE-Bänder 17 und 5 aufweisen.

6. Die mobile drahtlose Kommunikationsvorrichtung gemäß Anspruch 1, wobei die Vielzahl von primären RF-Empfängern aufweist:
eine Gruppe von Niedrigband-RF-Empfängern (31a-31c);
eine Gruppe von Mittelband-RF-Empfängern (32a-32d); und
eine Gruppe von Hochband-RF-Empfängern (33a-33b).

7. Die mobile drahtlose Kommunikationsvorrichtung gemäß Anspruch 1, wobei die Vielzahl von sekundären RF-Empfängern aufweist:
eine Gruppe von Niedrigband-RF-Empfängern (34a-34c);
eine Gruppe von Mittelband-RF-Empfängern (35a-35d); und
eine Gruppe von Hochband-RF-Empfängern (36a-36b).

8. Die mobile drahtlose Kommunikationsvorrichtung gemäß Anspruch 1, die weiter ein Gehäuse (11) aufweist, das die Antenne, die ersten und zweiten RF-Filter, die Vielzahl von primären und sekundären RF-Empfängern und den ersten DDPDT-RF-Schalter enthält.

9. Die mobile drahtlose Kommunikationsvorrichtung gemäß Anspruch 1, die weiter einen jeweiligen Duplexer aufweist, der mit jedem der ersten und zweiten RF-Filter assoziiert ist.

10. Ein Verfahren zur Verwendung einer mobilen drahtlosen Kommunikationsvorrichtung (10), die eine Antenne (12), eine Vielzahl von primären Funkfrequenz(RF - radio frequency)-Empfängern (21a-21c), die in einer Vielzahl von verschiedenen RF-Bändern arbeiten, wobei jeder primäre RF-Empfänger einen Differentialeingang hat, eine Vielzahl von sekundären RF-Empfängern (22a-22c), die ebenfalls in der Vielzahl von verschiedenen RF-Bändern arbeiten, wobei jeder sekundäre RF-Empfänger einen Differentialeingang hat, und erste und zweite RF-Filter (16-17) aufweist, die mit der Antenne gekoppelt sind und jeweils erste und zweite RF-Bänder aus der Vielzahl von verschiedenen RF-Bändern durchlassen, wobei das Verfahren aufweist:
Verwenden eines ersten DDPDT(differential double-pole double-throw)-RF-Schalters (14) in der mobilen drahtlosen Kommunikationsvorrichtung, der zwischen den ersten und zweiten RF-Filtern und den Differentialeingängen von jeweiligen ersten der Vielzahl von primären und sekundären RF-Empfängern gekoppelt ist.

11. Das Verfahren gemäß Anspruch 10, das weiter aufweist:
Verwenden dritter und vierter RF-Filter (18-19) in der mobilen drahtlosen Kommunikationsvorrichtung und gekoppelt mit der Antenne zum jeweiligen Durchlassen dritter und vierter RF-Bänder aus der Vielzahl von verschiedenen RF-Bändern; und
Verwenden eines zweiten DDPDT-RF-Schalters (15) in der mobilen drahtlosen Kommunikationsvorrichtung und gekoppelt zwischen den dritten und vierten RF-Filtern und den Differentialeingängen von jeweiligen zweiten der Vielzahl von primären und sekundären RF-Empfängern.

12. Das Verfahren gemäß Anspruch 11, das weiter aufweist ein Betreiben der ersten und zweiten DDPDT-RF-Schalter in einem Trägeraggregationsmodus.

13. Das Verfahren gemäß Anspruch 11, wobei die Vielzahl von primären RF-Empfängern und die Vielzahl von sekundären RF-Empfängern LTE(Long Term Evolution)-RF-Empfänger der vierten Generation aufweisen.

14. Das Verfahren gemäß Anspruch 13, wobei die ersten und zweiten RF-Bänder jeweils die LTE-Bänder 2 und 4 aufweisen; und wobei die dritten und vierten RF-Bänder jeweils die LTE-Bänder 17 und 5 aufweisen.

15. Das Verfahren gemäß Anspruch 10, wobei die Vielzahl von primären RF-Empfängern und die Vielzahl von sekundären RF-Empfängern jeweils aufweisen:
eine Gruppe von Niedrigband-RF-Empfängern (31a-31c);
eine Gruppe von Mittelband-RF-Empfängern (32a-32d); und
eine Gruppe von Hochband-RF-Empfängern (33a-33b).

## Revendications

1. Dispositif de communications sans fil mobile (10) comprenant :
une antenne (12) ;
une pluralité de récepteurs de radiofréquence (RF) primaires (21a-21c) configurés pour fonctionner à une pluralité de bandes RF différentes, chaque récepteur RF primaire ayant une entrée différentielle ;
une pluralité de récepteurs RF secondaires (22a-22c) également configurés pour fonctionner à la pluralité de bandes RF différentes, chaque récepteur RF secondaire ayant une entrée différentielle ;
des premier et deuxième filtres RF (16-17) couplés à ladite antenne et configurés pour laisser passer respectivement des première et deuxième bandes RF parmi la pluralité de bandes RF différentes ; et
un premier commutateur RF différentiel bipolaire, à deux directions (DDPDT) (14) couplé entre lesdits premier et deuxième filtres RF et les entrées différentielles de premiers récepteurs RF respectifs parmi lesdites pluralités de récepteurs RF primaires et secondaires (21b, 22b).

2. Dispositif de communications sans fil mobile de la revendication 1, comprenant en outre :
des troisième et quatrième filtres RF (18-19) couplés à ladite antenne et configurés pour laisser passer respectivement des troisième et quatrième bandes RF parmi la pluralité de bandes RF différentes ; et
un deuxième commutateur RF DDPDT (15) couplé entre lesdits troisième et quatrième filtres RF et les entrées différentielles de deuxième récepteurs RF respectifs parmi lesdites pluralités de récepteurs RF primaires et secondaires.

3. Dispositif de communications sans fil mobile de la revendication 2, comprenant en outre un dispositif de commande (13) configuré pour faire fonctionner lesdits premier et deuxième commutateurs RF DDPDT dans un mode d'agrégation de porteuses.

4. Dispositif de communications sans fil mobile de la revendication 2, dans lequel ladite pluralité de récepteurs RF primaires et ladite pluralité de récepteurs RF secondaires comprennent des récepteurs RF à évolution à long terme (LTE pour « Long Term Evolution ») de quatrième génération.

5. Dispositif de communications sans fil mobile de la revendication 4, dans lequel lesdites première et deuxième bandes RF comprennent respectivement des bandes LTE 2 et 4 ; et dans lequel lesdites troisième et quatrième bandes RF comprennent respectivement des bandes LTE 17 et 5.

6. Dispositif de communications sans fil mobile de la revendication 1, dans lequel ladite pluralité de récepteurs RF primaires comprend :
un groupe de récepteurs RF de bande basse (31a-31c) ;
un groupe de récepteurs RF de bande moyenne (32a-32d) ; et
un groupe de récepteurs RF de bande haute (33a-33b).

7. Dispositif de communications sans fil mobile de la revendication 1, dans lequel ladite pluralité de récepteurs RF secondaires comprend :
un groupe de récepteurs RF de bande basse (34a-34c) ;
un groupe de récepteurs RF de bande moyenne (35a-35d) ; et
un groupe de récepteurs RF de bande haute (36a-36b).

8. Dispositif de communications sans fil mobile de la revendication 1, comprenant en outre un boîtier (11) contenant ladite antenne, lesdits premier et deuxième filtres RF, lesdites pluralités de récepteurs RF primaires et secondaires, et ledit premier commutateur RF DDPDT.

9. Dispositif de communications sans fil mobile de la revendication 1, comprenant en outre un duplexeur respectif associé à chacun desdits premier et deuxième filtres RF.

10. Procédé d'utilisation d'un dispositif de communications sans fil mobile (10) comprenant une antenne (12), une pluralité de récepteurs de radiofréquence (RF) primaires (21a-21c) fonctionnant à une pluralité de bandes RF différentes, chaque récepteur RF primaire ayant une entrée différentielle, une pluralité de récepteurs RF secondaires (22a-22c) fonctionnant également à la pluralité de bandes RF différentes, chaque récepteur RF secondaire ayant une entrée différentielle, et des premier et deuxième filtres RF (16-17) couplés à l'antenne et laissant passer respectivement des première et deuxième bandes RF parmi la pluralité de bandes RF différentes, le procédé comprenant le fait :
d'utiliser un premier commutateur RF différentiel bipolaire, à deux directions (DDPDT) (14) dans le dispositif de communications sans fil mobile couplé entre les premier et deuxième filtres RF et les entrées différentielles de premiers récepteurs RF respectifs parmi les pluralités de récepteurs RF primaires et secondaires.

11. Procédé de la revendication 10, comprenant en outre le fait :
d'utiliser des troisième et quatrième filtres RF (18-19) dans le dispositif de communications sans fil mobile et couplés à l'antenne pour laisser passer respectivement des troisième et quatrième bandes RF parmi la pluralité de bandes RF différentes ; et
d'utiliser un deuxième commutateur RF DDPDT (15) dans le dispositif de communications sans fil mobile et couplé entre les troisième et quatrième filtres RF et les entrées différentielles de deuxièmes récepteurs RF respectifs parmi les pluralités de récepteurs RF primaires et secondaires.

12. Procédé de la revendication 11 comprenant en outre le fait de faire fonctionner les premier et deuxième commutateurs RF DDPDT dans un mode d'agrégation de porteuses.

13. Procédé de la revendication 11, dans lequel la pluralité de récepteurs RF primaires et la pluralité de récepteurs RF secondaires comprennent des récepteurs RF à évolution à long terme (LTE pour « Long Term Evolution ») de quatrième génération.

14. Procédé de la revendication 13, dans lequel les première et deuxième bandes RF comprennent respectivement des bandes LTE 2 et 4 ; et dans lequel les troisième et quatrième bandes RF comprennent respectivement des bandes LTE 17 et 5.

15. Procédé de la revendication 10, dans lequel chacune de la pluralité de récepteurs RF primaires et de la pluralité de récepteurs RF secondaires comprend :
un groupe de récepteurs RF de bande basse (31a-31c) ;
un groupe de récepteurs RF de bande moyenne (32a-32d) ; et
un groupe de récepteurs RF de bande haute (33a-33b).
